# EUROPEAN PATENT SPECIFICATION

(11) **EP 1 715 226 B1**
(45) Date of publication and mention of the grant of the patent: **25.06.2008**
(21) Application number: 06007662.7
(22) Date of filing: 12.04.2006
(51) Int. Cl.: F16K 3/02, F16K 31/08

(54) **Electromagnetic valve**
Elektromagnetventil
Soupape électromagnétique

(30) Priority: 19.04.2005 EP 05008462
(43) Date of publication of application: 25.10.2006
(73) Proprietor: Tyco Electronics Belgium EC N.V., 8020 Oostkamp (BE)
(72) Inventor: Fryns, Joeri, 8200 Brugge (BE); Hiltrop, Frank, 8200 Sint-Andries (BE)
(74) Representative: Beck, Josef

(56) References cited:
- GB-A- 2 125 222
- US-A- 3 177 384
- US-A- 3 666 231
- US-A- 4 458 227

## Description

### Background of the invention

### 1. Field of the invention

The present invention refers to an electromagnetic valve with a housing with a coil and a magnet system with a closing element. Depending on the energizing of the coil, the magnet system seals or unseals a valve opening.

### 2. Description of the related art

It is known in the state of the art to use an electromagnetic valve with a housing comprising a valve opening with a closing element which is dedicated to the valve opening whereby the closing element is connected to a coil. Furthermore, the electromagnetic valve comprises a magnet which is fixed to the housing. Depending on the energizing of the coil, the coil is moved from a first to a second position, opening or closing the valve opening. GB 2 125 222 discloses such a valve.

### Summary of the invention

The object of the present invention is to provide an improved electromagnetic valve with a simpler construction.

This object is achieved by the electromagnetic valve according to claim 1.

Preferred embodiments of the present invention are defined in the dependent claims.

The present invention is an electromagnetic valve with a magnet housing comprising two plates that are connected to each other. The magnet is arranged on a first plate and a coil chamber is disposed between the magnet and the second plate. The coil is fixed to the housing and the magnet housing is movably arranged in the housing. Depending on the energizing of the coil, the magnet housing with the closing element is swivelled from a first position to a second position, sealing or unsealing the valve opening. The construction of the electromagnetic valve is such that the coil is at least partly received in the coil chamber in the first or second position of the magnet housing. Thus, only little space is required and due to the fixed coil no movable conducting lines are required. This results in a robust electromagnetic valve which only requires a small amount of space.

Furthermore, the present invention is an electromagnetic valve, whereby the closing element is connected to the housing by a spring, defining a first position of the closing element. The utilization of a spring provides a simple means for defining the position of the closing element during the non-energizing state of the coil.

Moreover, the present invention relates to an electromagnetic valve with a housing which is shaped as a plate comprising a recess in which the electromagnetic value is arranged. The realization of the housing in the shape of a plate comprising a recess for the electromagnetic valve constitutes a simple construction which can be easily produced.

Furthermore, the present invention is an electromagnetic valve with a closing element connected to one of the plates of the magnet housing. Preferably, the closing element is in one piece with the plate. This embodiment is simply constructed and may be produced inexpensively.

Furthermore, the present invention is an electromagnetic valve with a closing element which is shaped as a plate comprising a circular hole. The use of the circular hole provides a further means for defining the flow rate through the valve.

Furthermore, the present invention relates to an electromagnetic valve with a magnetic housing comprising two parallely arranged plates connected by side faces whereby one slot is arranged in each side face. The slots are aligned in parallel to the direction of movement of the magnet housing.

### Brief description of the drawings

These and other objects and features of the present invention will become clear from the following description taken in conjunction with the accompanying drawings in which:
Figure 1 depicts an embodiment of the electromagnetic valve arranged in a hydraulic line;
Figure 2 is a perspective view of the electromagnetic valve;
Figure 3 depicts a further perspective view of the electromagnetic valve in an open status;
Figure 4 depicts a cross-sectional view of the valve;
Figure 5 depicts a perspective view of the magnet system of the electromagnetic valve in a first position; and
Figure 6 depicts the magnet system of the electromagnetic valve in a second position.

### Description of the preferred embodiments

The inventive electromagnetic valve may be used in different embodiments and arrangements and in different, technical fields. Preferably, the electromagnetic valve may be used in hydraulic lines such as an hydraulic line of an hydraulic system of a motor vehicle. However, the use of the electromagnetic valve is not limited to motor vehicles.

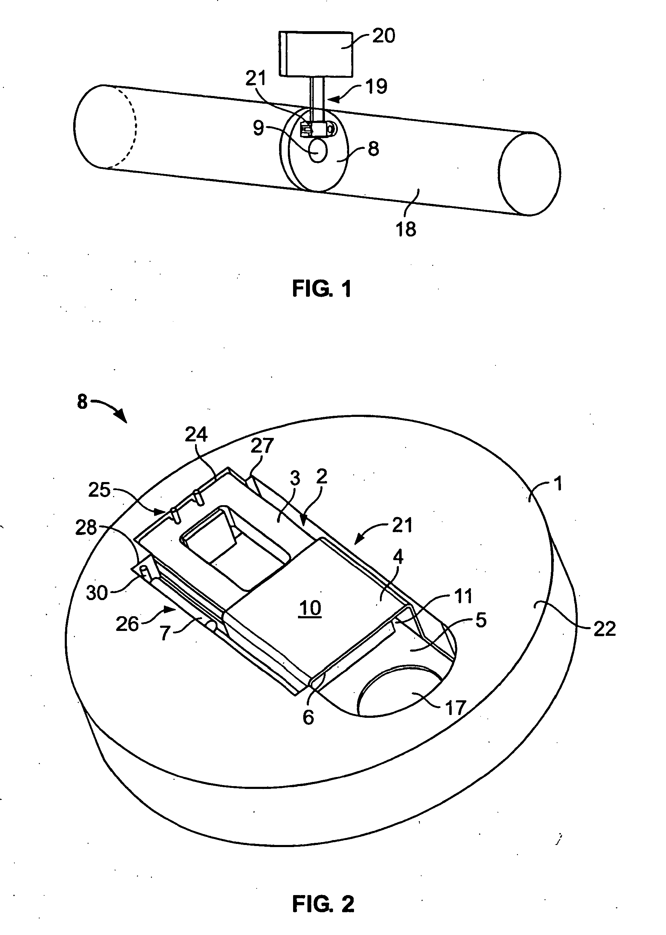

Figure 1 depicts a partial view of a hydraulic line 18 in which the electromagnetic valve 8 is arranged and divides the line 18 into two sections. The valve 8 is connected by control lines 19 with a controlling unit 20. The valve 8 comprises a magnet system 21 and a valve opening 9. Depending on the controlling signal of the controlling unit 20, the magnet system 21 seals or opens the valve opening 9. In a closed state of the valve, the two sections of the line 18 are separated. In an open state of the valve 8, the two sections of the line 18 are hydraulically connected by the valve opening 9.

Figure 2 depicts the valve 8 in more detail, the valve 8 comprising a housing 1 with the magnet system 21. In this embodiment, the housing 1 is constructed as a circular plate with a diameter that is adapted to the diameter of the line 18. Therefore, the housing 1 hydraulically divides the hydraulic line 18 into two sections. Depending on the embodiment or the technical field, the housing 1 may also have a different shape.

In the housing 1, a recess 2 is disposed on a front side 22. In this embodiment, the recess 2 has the shape of a rectangle with a smaller rounded side face. The magnet system 21 is arranged in the recess 2, comprising a magnet coil 3, a magnet housing 4 with a magnet 6 and a closing element 5. The magnet housing 4 is connected by a spring element 7 to the housing 1. The magnet coil 3 is fixed to the housing, whereby the magnet housing 4 is movably arranged within the recess 2. In Figure 2, the magnet system 21 is depicted in a second state sealing the non-visible valve opening 9. The valve opening 9 is arranged in a bottom face of the recess 2 under the magnet housing 4.

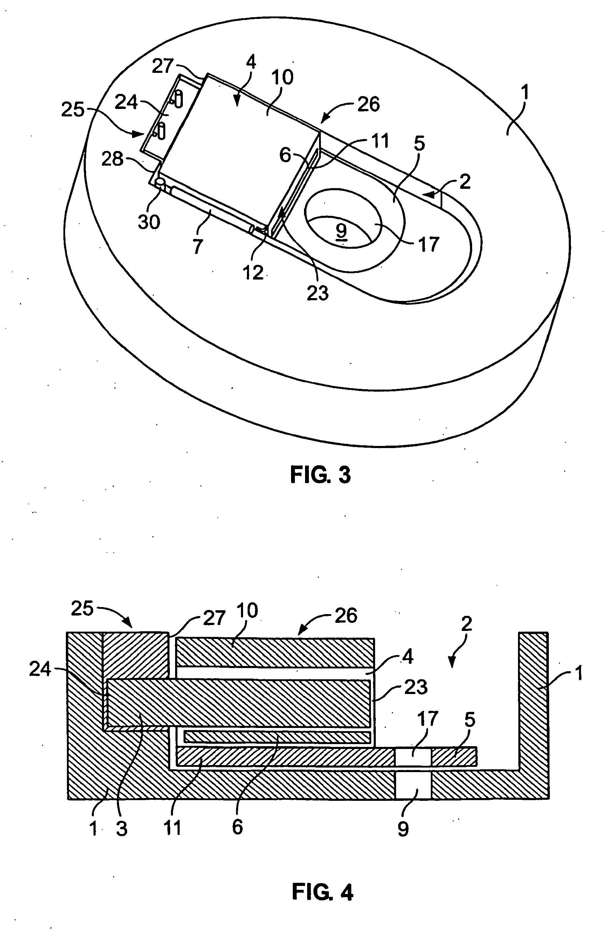

Figure 3 depicts the electromagnetic valve in a first state during which the valve opening 9 is open, whereby the magnet housing 4 is at least partially moved over the magnet coil 3, receiving the magnet coil 3 in a magnet chamber 23 (Figure 4). The magnet chamber 23 is arranged between a top plate 10 of the magnet housing 4 and the magnet 6 which is directly arranged on the bottom plate 11 of the magnet housing 4. Between the magnet 6 and the top plate 11, sufficient space is provided for receiving the magnet coil 3.

The spring 7 is fixed to a stud 30 of the housing 1 by the first ending and to a holding plate 12 of the magnet housing 4 by the second ending.

The magnet coil 3 shows a rectangular shape with a smaller end face 24 which is disposed in an end section 25 of the recess 2. The magnet coil 3 is fixed to the housing 1 in the area of the end face 24. The end section 25 has a smaller width than a middle section 26 of the recess 2. Therefore, the middle section 26 passes over to the end section 25 by two step faces 27, 28 which are arranged at opposed sides of the recess 2.

In the first position as shown in Figure 3, the magnet housing 4 abuts at the first and the second step face 27, 28. Thus, the first and the second step faces 27, 28 constitute stop faces for a predetermined position of the magnet housing 4 and the closing element 5.

Figure 4 depicts a cross-sectional view of the valve 8 as shown in Figure 3. The magnet coil 3 is arranged in the magnet chamber 23 between the top plate 10 and the magnet 6. Furthermore, the closing element 5 which is constituted as a plate comprising a hole 29, is connected to the bottom plate 11. In the shown position of the closing element 5, the hole 29 is arranged above the valve opening 9.

The hole 29 is preferably shaped as a circular area, as is the same with the cross-section area of the valve opening 9.

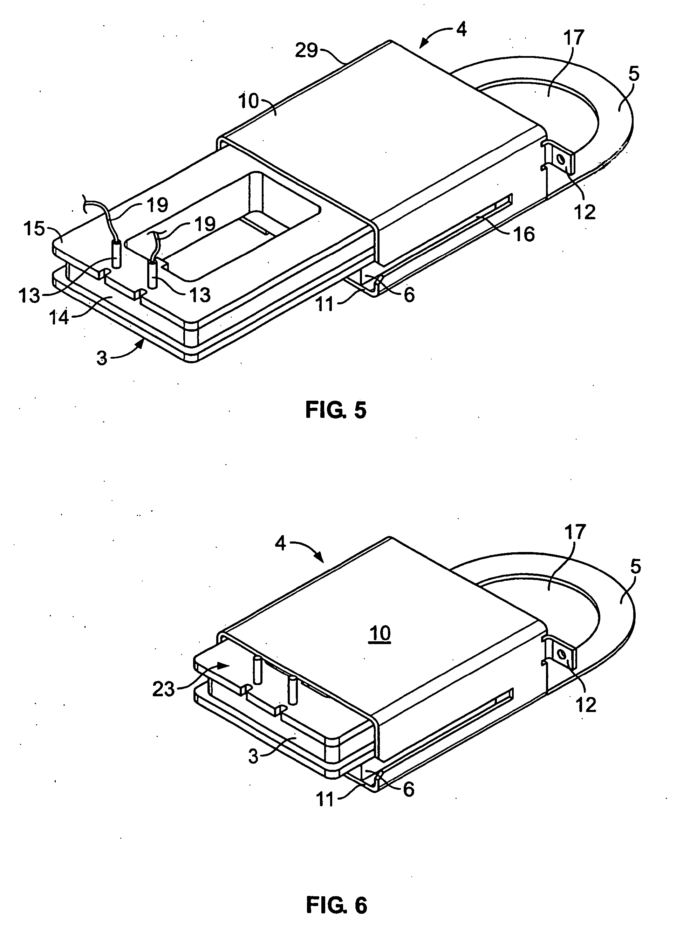

Figure 5 depicts the magnet coil 3 and the magnet housing 4 in more detail, in the second position at which the magnet coil 3 is at least partly arranged outside of the magnet chamber 23. The coil 3 comprises a frame 15 and windings 14, whereby the windings 14 are connected to terminals 13. The terminals 13 are electrically connected to the controlling lines 19 as shown in Figure 1.

The magnet housing 4 comprises the top plate 10 and the bottom plate 11 which are connected by side faces 29. Slots 16 are disposed in the side faces 29, whereby the slots 16 are aligned in parallel to the direction of movement of the magnet housing 4. The magnet 6 has almost the same shape as the bottom plate 11 and is fixed directly to the bottom plate 11. The magnet housing 4 is made of a magnetic material, e.g. metal. A south pole of the magnet 6 is allocated to the bottom plate 11. Due to the direct connected between the magnet 6, the bottom plate 11 and the top plate 10, the top plate 10 serves as a magnetic south pole. Depending on the direction of the current guided to the terminals 13, the magnet coil 3 generates a magnetic south pole on an upper side and a, magnetic north pole on a lower side. This means that the magnetic field of the magnet 6 and the magnetic field of the magnet coil 3 repel each other. This results in a movement of the magnet housing 4 from the first position as shown in Figure 3 to a second position as shown in Figure 2. The movement of the magnet housing 4 is then directed against the biasing of the spring 7 which tries to keep the magnet housing 4 in the first position.

If the controlling unit 20 stops the control of the magnet coil 3, the magnetic field of the magnet coil 3 disappears and the magnet housing 4 is pulled back to the first position by the tension of the spring 7.

Depending on the embodiment and arrangement of the magnet system 21, the magnet housing 4 may also be held in the second position as shown in Figure 3 by the biasing of the spring 7 and be pulled back to the first position as shown in Figure 3 by a magnetic field of the magnet coil 3 which attracts the magnetic field of the magnet 6.

Figure 6 depicts the magnet coil 3 and the magnet housing 4 in the first position of the valve 8 shown in Figure 3 in more detail.

Depending on the embodiment of the invention, the closing element 5 may be disposed as a separate part or is preferably in one piece with the bottom plate 11. As it is shown in Figures 2 and 3, the bottom plate 11 serves as a closing element sealing the valve opening 9 of the housing 1 in the second position, as shown in Figure 2. In the second position, the two sections of the hydraulic line 18 are disconnected. In the first position of the valve 8 as shown in Figure 3, the two sections of the hydraulic line 18 are connected by the valve opening 9.

### Reference list

- 1: housing
- 2: recess
- 3: magnet coil
- 4: magnet housing
- 5: closing element
- 6: magnet
- 7: spring
- 8: valve
- 9: valve opening
- 10: top plate
- 11: bottom plate
- 12: holding plate
- 13: terminal
- 14: windings
- 15: frame
- 16: slot
- 17: hole
- 18: line
- 19: control line
- 20: controlling unit
- 21: magnet system
- 22: front side
- 23: magnet chamber
- 24: end face
- 25: end section
- 26: middle section
- 27: first step face
- 28: second step face
- 29: side face
- 30: stud

## Claims

1. Electromagnetic valve (8) with a housing (1), with a valve opening (9), with a closing element (5), that is dedicated to the valve opening (9), whereby the closing element (5) comprises a magnet (6) and a magnet housing (4 ), **characterized in that** the magnet housing comprises two connected metal plates (10, 11), whereby the magnet is arranged between the plates (10, 11) in contact with a plate (11), whereby a coil chamber (23) is arranged between the magnet (6) and the further plate (10), whereby the closing element (5) is connected with the magnetic housing (4) and movably arranged in the housing (1), whereby the closing element (5) seals the valve opening (9) in a first position, whereby the closing element (5) unseals the valve opening (9) in a second position, whereby a magnet coil (3) is fixed to the housing (1), whereby by energising the magnet coil (3) an electromagnetic field is induced, whereby the electromagnetic field of the coil (3) and the magnetic field of the magnet (6) attract or repel each other, whereby the position of the closing element (5) is controlled by the energising of the magnet coil (3) sealing or unsealing the valve opening .(9), whereby the magnetic coil (3) is swivelled within the coil chamber (23) by changing the position of the closing element (5) from the first to the second or from the second to the first position.

2. Electromagnetic valve according to claim 1, whereby the closing element (5) is connected by a spring (7) with the housing (1) defining a first position of the closing element (5).

3. Electromagnetic valve according to claim 1 or 2, whereby the housing (1) is shaped as a plate with a recess (2) in which the magnet coil (3), the magnet housing (4) with the magnet (6) and the closing element (5) are arranged.

4. Electromagnetic valve according to any of the claims 1 or 3, whereby the closing element (5) is connected with one of the plates (11).

5. Electromagnetic valve according to any of the claims 1 to 4, whereby the closing element (5) is in one piece with the plate (11).

6. Electromagnetic valve according to any of the claims 1 to 5, whereby the closing element (5) is shaped as a plate with a circular hole (17).

7. Electromagnetic valve according to any of the claims 1 to 6, whereby the magnet housing (4) comprises slots (16) at small sides (29) along the direction of movement of the magnetic housing.

## Patentansprüche

1. Elektromagnetventil (8) mit einem Gehäuse (1), mit einer Ventilöffnung (9), mit einem Verschlusselement (5), das der Ventilöffnung (9) zugeordnet ist, wobei das Verschlusselement (5) einen Magneten (6) und ein Magnetgehäuse (4) umfasst, **dadurch gekennzeichnet, dass** das Magnetgehäuse zwei verbundene Metallplatten (10, 11) umfasst, wobei der Magnet zwischen den Platten (10, 11) in Berührung mit einer Platte (11) angeordnet ist, wobei eine Spulenkammer (23) zwischen dem Magneten (6) und der weiteren Platte (10) angeordnet ist, wobei das Verschlusselement (5) mit dem Magnetgehäuse (4) verbunden und beweglich in dem Gehäuse (1) angeordnet ist, wobei das Verschlusselement (5) die Ventilöffnung (9) in einer ersten Stellung abdichtet, wobei das Verschlusselement (5) die Ventilöffnung (9) in einer zweiten Stellung öffnet, wobei eine Magnetspule (3) in dem Gehäuse (1) befestigt ist, wobei durch Erregen der Magnetspule (3) ein elektromagnetisches Feld induziert wird, wobei das elektromagnetische Feld der Spule (3) und das Magnetfeld des Magneten (6) einander anziehen oder abstoßen, wobei die Stellung des Verschlusselements (5) durch das Erregen der Magnetspule (3) gesteuert wird, was die Ventilöffnung (9) abdichtet oder öffnet, wobei die Magnetspule (3) durch ein Verändern der Stellung des Verschlusselements (5) von der ersten zu der zweiten oder von der zweiten zu der ersten Stellung innerhalb der Spulenkammer (23) geschwenkt wird.

2. Elektromagnetventil nach Anspruch 1, wobei das Verschlusselement (5) durch eine Feder (7) mit dem Gehäuse (1) verbunden ist, die eine erste Position des Verschlusselements (5) definiert.

3. Elektromagnetventil nach Anspruch 1 oder 2, wobei das Gehäuse (1) als eine Platte mit einer Aussparung (2) geformt ist, in der die Magnetspule (3), das Magnetgehäuse (4) mit dem Magneten (6) und das Verschlusselement (5) angeordnet sind.

4. Elektromagnetventil nach einem der Ansprüche 1 oder 3, wobei das Verschlusselement (5) mit einer der Platten (11) verbunden ist.

5. Elektromagnetventil nach einem der Ansprüche 1 bis 4, wobei das Verschlusselement (5) in einem Stück mit der Platte (11) vorliegt.

6. Elektromagnetventil nach einem der Ansprüche 1 bis 5, wobei das Verschlusselement (5) als eine Platte mit einem kreisförmigen Loch (17) geformt ist.

7. Elektromagnetventil nach einem der Ansprüche 1 bis 6, wobei das Magnetgehäuse (4) Schlitze (16) an Schmalseiten (29) längs der Bewegungsrichtung des das Magnetgehäuses umfasst.

## Revendications

1. Soupape électromagnétique (8) comportant un boîtier (1), avec une ouverture de soupape (9), un élément de fermeture (5) affecté à l'ouverture de soupape (9), l'élément de fermeture (5) comprenant un aimant (6) et un boîtier d'aimant (4), **caractérisé en ce que** le boîtier de l'aimant comprend deux plaques métalliques connectées (10, 11), l'aimant étant agencé entre les plaques (10, 11), en contact avec une plaque (11), une chambre de bobine (23) étant agencée entre l'aimant (6) et la plaque additionnelle (10), l'élément de fermeture (5) étant connecté au boîtier magnétique (4) et étant agencé de manière mobile dans le boîtier (1), l'élément de fermeture (5) assurant la fermeture étanche de l'ouverture de soupape (9) dans une première position, l'élément de fermeture (5) assurant l'ouverture de l'ouverture de soupape (9) dans une deuxième position, une bobine de l'aimant (3) étant fixée sur le boîtier (1), l'excitation de la bobine de l'aimant (3) induisant un champ électromagnétique, le champ électromagnétique de la bobine (3) et le champ magnétique de l'aimant (6) s'attirant ou se repoussant mutuellement, la position de l'élément de fermeture (5) étant contrôlée par l'excitation de la bobine de l'aimant (3), assurant la fermeture étanche ou l'ouverture de l'ouverture de soupape (9), la bobine de l'aimant (3) étant pivotée dans la chambre de la bobine (23) par suite du changement de la position de l'élément de fermeture (5) de la première position vers la deuxième position ou de la deuxième position vers la première position.

2. Soupape électromagnétique selon la revendication 1, dans laquelle l'élément de fermeture (5) est connecté par un ressort (7) au boîtier (1), définissant une première position de l'élément de fermeture (5).

3. Soupape électromagnétique selon les revendications 1 ou 2, dans laquelle le boîtier (1) a la forme d'une plaque comportant un évidement (2) dans lequel sont agencés la bobine de l'aimant (3), le boîtier de l'aimant (4) avec l'aimant (6) et l'élément de fermeture (5).

4. Soupape électromagnétique selon l'une quelconque des revendications 1 ou 3, dans laquelle l'élément de fermeture (5) est connecté à une des plaques (11).

5. Soupape électromagnétique selon l'une quelconque des revendications 1 à 4, dans laquelle l'élément de fermeture (5) fait partie intégrante de la plaque (11).

6. Soupape électromagnétique selon l'une quelconque des revendications 1 à 5, dans laquelle l'élément de fermeture (5) a la forme d'une plaque comportant un trou circulaire (17).

7. Soupape électromagnétique selon l'une quelconque des revendications 1 à 6, dans laquelle le boîtier de l'aimant (4) comprend des fentes (16) au niveau de côtés courts (29), le long de la direction du déplacement du boîtier de l'aimant.
